(19) **Europäisches Patentamt European Patent Office Office européen des brevets**

(11) **EP 4 211 028 B1**

(12) **EUROPEAN PATENT SPECIFICATION**

(45) Date of publication and mention
of the grant of the patent:
**09.07.2025 Bulletin 2025/28**

(21) Application number: **21806412.9**

(22) Date of filing: **12.09.2021**

(51) International Patent Classification (IPC):
**B62H 7/00** *(2006.01)*    **B62D 37/06** *(2006.01)*
**B62M 1/10** *(2010.01)*

(52) Cooperative Patent Classification (CPC):
**B62H 7/00; B62D 37/06; B62M 1/10;** B62K 2202/00

(86) International application number:
**PCT/IN2021/050896**

(87) International publication number:
**WO 2022/054098 (17.03.2022 Gazette 2022/11)**

(54) **A BALANCING SYSTEM FOR A SADDLE-TYPE VEHICLE**

**AUSGLEICHSSYSTEM FÜR EIN SATTELFAHRZEUG**

**SYSTÈME D'ÉQUILIBRAGE POUR VÉHICULE DE TYPE À SELLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2020 IN 202041039817**

(43) Date of publication of application:
**19.07.2023 Bulletin 2023/29**

(73) Proprietor: **TVS Motor Company Limited
600006 Chennai (IN)**

(72) Inventors:
* **ANANDHU, Suresh**
  **Chennai, 600006 (IN)**
* **KARANAM, Venkata Manga Raju**
  **Chennai, 600 006 (IN)**
* **ABHISHEK, Sharma**
  **Chennai, 600006 (IN)**
* **SANTHOSH, Manoharan**
  **Chennai, 600006 (IN)**
* **BARATH, Mohan**
  **Chennai, 600006 (IN)**

(74) Representative: **Patentanwaltskanzlei
Matschnig & Forsthuber OG
Biberstraße 22
Postfach 36
1010 Wien (AT)**

(56) References cited:
EP-A1- 2 941 380          EP-A2- 1 563 716
WO-A1-2008/072043     WO-A1-2019/198110
WO-A1-2019/198110     WO-A1-2019/198110
CN-U- 209 852 452         CN-U- 209 852 452
CN-U- 209 852 452         JP-A- 2012 201 254
JP-A- 2012 201 254        US-A1- 2019 233 039
US-A1- 2019 233 039      US-A1- 2019 233 039

## Description

## TECHNICAL FIELD

The present subject matter relates to a saddle type vehicle including a balancing system.

## BACKGROUND

The dependence on two-wheeled vehicles or tricycles is increasing in developing countries. Majority of people rely more on two-wheelers for transportation in such economies. However, many users are unwilling or unable to operate motorcycles as well as scooters. Such users include senior members of the society, short-heighted persons, amateur riders and the like. These are the persons who are unable to balance the vehicle with two wheels by themselves due to the safety concerns in the event of crashes, and the skills required to maintain vehicle stability during vehicle use. Ideally, the two wheeled vehicles should be standing upright. However, there is always small amount of unbalanced weight on either the right-hand side or on the left-hand side of the vehicle. Because of which, the two-wheeled vehicle tends to lean either on the right-hand side or the left-hand side depending on the unbalanced weight on that respective side of the vehicle. Document CN209852452U shows a saddle type vehicle including a balancing system, said balancing system comprising: a casing member rotatable about a first axis; a flywheel rotatable about a lateral axis, said flywheel accommodated inside said casing member; a first driving member configured to enable rotational movement to said casing member; a second driving member configured to enable rotational movement to said flywheel, wherein the balancing system is rotatably supported by a support structure of said saddle type vehicle, wherein said casing member includes one or more faces being configured to include multiple louvers.

## BRIEF DESCRIPTION OF THE DRAWINGS

The detailed description is described with reference to an embodiment of a saddle type two wheeled with accompanying figures. The same numbers are used throughout the drawings to reference like features and components.

Figure 1 depicts a side view of an exemplary saddle-type vehicle in accordance with an embodiment of the present subject matter.

Figure 2 illustrates an exemplary vehicle employing a balancing system according to an aspect of the present invention.

Figure 3 illustrates a portion of the balancing system attached to the frame assembly of the vehicle.

Figure 4 illustrates a top view of a saddled-vehicle according to an aspect of the present invention.

Figure 5a illustrates an assembly of a balancing system according to an aspect of the present subject-matter.

Figure 5b illustrates an exploded view of a balancing system according to an aspect of the present invention.

Figure 6 illustrates a sectional view of the balancing system taken along vertical axis VX as shown in the Figure 3.

Figure 7a illustrates a perspective view of a flywheel of the balancing system according to an aspect of the present invention.

Figure 7b illustrates a sectional view of the flywheel of the balancing system as taken along axial direction as shown in Figure 7a.

Figure 8 illustrates an exploded view of the casing member of the balancing system according to an aspect of the present invention.

## DETAILED DESCRIPTION OF THE INVENTION

Unlike four-wheelers, small capacity vehicles like two-wheelers (especially) and three-wheelers are prone to imbalance. For example, in two-wheeler the imbalance is higher at lower speeds. A lot of accidents occur due to the instability of the two-wheeled vehicle along the roll direction, particularly at low speeds. People as mentioned earlier struggle to balance the two-wheeler when in traffic conditions. The difficulty in balancing the two-wheeler aggravates if the two-wheeler is heavy. A two-wheeler accident could be fatal to the users as well as cause damage to the vehicle. This poses a safety threat to the users of the two-wheeled vehicles.

The two-wheeler has an inherent instability in roll direction. This causes the vehicle to fall by itself at lower speed. It becomes increasingly difficult to balance a vehicle as the weight of the vehicle increases. Common people struggle in traffic due to this instability of two-wheeler.

In conventional two-wheelers, riders find it difficult to balance a two-wheeler at low speeds. To balance a two wheeled saddle vehicle, a rider is required to apply corrective steering torque to keep the vehicle from falling at extremely low speeds. This physical phenomenon is also applicable for a simple bicycle as well.

For the purpose of balancing the vehicles, self-balancing systems are known in the art. Most of the existing systems use multiple flywheels for balancing of the vehicle. In a known art, two gyroscopes are used in a two-wheeler to balance the vehicle. A control system controls the angle and speed of the gyroscopes based on the angle of tilt of the motorcycle. The system has a plurality of flywheels (Control Moment Gyroscopes-CMGs) and a motor driving the flywheel has three degrees of freedom to balance a two-wheeler.

In another known art, a control system is configured, where in, speed and angular position of the vehicle are taken as inputs, the speed and angular position of one of the flywheels is controlled to balance the motorcycle.

However, these known systems occupy enormous amount of space in the layout of the vehicle. The known systems, if implemented in two wheelers or tricycles might occupy ample space in the motor vehicle whereby the utility space available for usage by the user is affected. In two-wheelers, any additional systems could make the vehicle look bulky and heavier. Furthermore, the existing systems are too complex and expensive.

In certain systems known in the art, the overall width or height of the vehicle is affected due to the balancing system making them impractical for conventional use. There exists a challenge to provide a balancing system for a vehicle like the two-wheeler or tricycle.

Furthermore, in a known art, some other systems use a front steering to balance the two-wheeler at lower speeds and stand still. These systems struggle to balance the vehicle in case of higher disturbing impulses. This type of system demands heavier control actuators. One existing system has a provision to increase castor of the vehicle for taking care of higher impulses and balance at standstill. This makes the system too complex and poses manufacturability issues as well as result in increasing the cost. These kinds of systems also require heavy motors at the steering mechanism of the two-wheeler. Other existing systems use expensive sensors and controllers for the roll angle estimation and balancing. Most known systems lead to a delayed stabilization of the vehicle. Such delay is perceived by the rider, as a result, the rider is subjected to nervousness feeling and loss of confidence, which is undesirable.

Therefore, a cost-effective, simple and compact system for balancing the two-wheeled vehicle is desirable, which overcomes all the above stated problems and limitations as well as other problems of known art.

The present invention is proposed to address the above mentioned and other problems in the prior art. A compact and easy to incorporate system is desirable. The invention is defined by the claims.

With the above objectives in view, the present invention discloses a saddle type vehicle including a balancing system. The balancing system provides an output in the form of a reaction torque opposite to the roll direction of the vehicle to prevent falling of the vehicle, thus rendering the saddled vehicle stable in the roll direction.

It is an object of the present invention to provide the saddle type vehicle with a balancing system which provides a reaction torque to the vehicle to make it stable in roll direction, and stay upright even at lower speeds.

According to an embodiment of the present invention, the saddle-type vehicle comprises a balancing system. The balancing system includes a casing member configured to support other members of the balancing system. The balancing system includes a flywheel rotatably supported inside the casing member. The casing member is rotatable about a first axis. A first driving member is configured to provide rotational movement to the casing member. The flywheel is rotatable about a second axis. The second axis is along the axial direction of the flywheel. A second driving member is configured to provide rotational movement to the flywheel.

According to an embodiment of the present invention, the first driving member and the second driving member are fixedly supported by the casing member.

According to an embodiment of the present invention, the second driving member is configured to rotate the flywheel at a pre-determined rotation per minute (RPM).

According to an embodiment of the present invention, the flywheel and the second driving member are substantially accommodated within the casing member.

According to an embodiment of the present invention, the balancing system is mounted on the frame assembly of the vehicle.

According to an embodiment of the present invention, the frame assembly of the saddle-type vehicle includes a head tube, a first frame member that is extending rearwardly at an angle from the head tube. The first frame member is extending rearwardly along a vehicle longitudinal axis. Further, one or more second frame members are extending rearwardly upwardly from the first frame. The one or more second frame members are extending rearwardly of the vehicle along the vehicle longitudinal axis.

Further, a central space in the vehicle is defined by a central frame member of the frame assembly. The central frame member is disposed along the vehicle longitudinal axis and in between the first frame member and the one or more second frame members. The central frame member is lower to the first frame member and the one or more second frame members.

The frame assembly of the vehicle includes a support structure extending downwardly from the central frame member. The support structure is configured to support one or more vehicular components. For example, the one or more vehicular components include the balancing system, the swing arm, etc.

According to an embodiment of the present invention, the support structure includes a first arm, a second arm, and a joining arm. The first arm is configured to extend downwardly from a first junction of the first frame member. The second arm is configured to extend downwardly from a second junction of the one or more second frame members. The joining arm is configured to connect a first arm-end portion and a second arm-end portion along the vehicle longitudinal axis.

According to an aspect of the present subject-matter, the first arm and the second arm are configured to extend downwardly from the central frame member and perpendicular to the vehicle longitudinal axis. The joining arm is disposed below and parallel to the central frame.

According to an embodiment of the present invention, the support structure is configured to rotatably support the balancing system. The support structure is a U-shaped structure when viewed from a side view.

According to an embodiment of the present invention, the flywheel is cylindrical in shape. The flywheel being cylindrical in shape, is solid at the center and includes open ended sides disposed opposite to either sides of the center. The portions of the flywheel between the center and the open-ended sides of the flywheel are hollow. The flywheel includes a flywheel shaft extending throughout the axis of the flywheel. One of the hollow portions of the flywheel is configured to accommodate a portion of the second driving member.

According to an embodiment of the present invention, one side of the shaft of the flywheel is rotatably attached to the casing member and the other side of the flywheel shaft is rotatably attached to an output shaft of the second driving member.

According to an embodiment of the present invention, the casing member includes one or more faces. The one or more faces of the casing member when assembled form a partial cuboid structure. The one or more faces of the casing member include multiple louvers. The multiple louvers function as opening for entry of air inside the casing member. The atmospheric air that enters the casing member through the louvers carries away the heat generated by the second driving member that is disposed inside the casing member.

The hollow portions in the flywheel are configured to achieve reduction in the size of the flywheel. The weight of the flywheel is considerably reduced and compact. The compact flywheel is easy to mount inside the casing member. The compact size of the flywheel requires correspondingly compact casing member. Therefore, a compact balancing member is achieved. The compact balancing member when assembled in the vehicle is almost within the width of the vehicle. The packaging of the compact balancing member within the width of the vehicle is easier.

According to an embodiment of the present invention, the multiple louvers in the casing member are configured to reduce the overall weight of the casing member.

According to an embodiment of the present invention, the flywheel is made up of a solid metal.

According to an embodiment of the present invention, the balancing system is disposed at the center of the vehicle along vehicle transverse axis thereby providing compactness and weight balance along the lateral direction of the vehicle.

According to an embodiment of the present invention, the balancing system is disposed at a lower portion of the vehicle. The center of gravity is lower at this location, because of which, an improved balancing of the vehicle is achieved.

According to an embodiment of the present invention, the saddle-type vehicle includes a controller configured to process the inputs from one or more sensors to detect the roll angle of the vehicle. Accordingly, the controller is configured to operate the balancing system as required to balance the vehicle.

According to an embodiment of the present invention, the flywheel is rotating about a second axis. For example, the second axis is parallel to the vehicle transverse axis. The second driving member is configured to rotate the flywheel at a predetermined rotational speed (rpm). The flywheel always rotates at the predetermined rotational speed rpm. During low speeds and unstable conditions, the vehicle tends to roll along a vehicle roll direction. The controller is configured to detect the roll angle of the vehicle and accordingly enable rotational movement of the casing member. The casing member is configured to rotate about the first axis. For example, casing member is configured to rotate about the vertical axis. According to the direction of rotation of the flywheel and the casing member, a reaction torque is produced along the vehicle longitudinal direction. As a result, the reaction torque, which is required to balance the vehicle is produced.

Arrows wherever provided in the top right corner in the drawings depicts direction with respect to the vehicle, wherein an arrow F denotes front direction, an arrow R indicates rear direction, an arrow Up denotes upward direction, an arrow Dw denotes downward direction.

The summary provided above explains the basic features of the invention and does not limit the scope of the invention. The nature and further characteristic features of the present invention will be made clearer from the following descriptions made with reference to the accompanying drawings. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

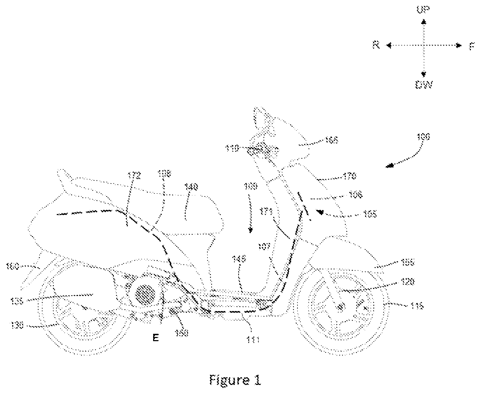

Figure 1 depicts a side view of an exemplary saddle-type vehicle 100, in accordance with an embodiment of the present subject matter. The vehicle 100 has a frame assembly 105 (schematically shown with dotted lines) that includes a head tube 106, a first frame member 107 extending rearwardly downward from the head tube 106. The first frame member 107 may comprise one or more main tube(s), and one or more second frame members 108 extending inclinedly rearward from a rear portion of the first frame member 107. The one or more second frame members 108 may include one or more rear frames of the vehicle. In the present embodiment, the vehicle 100 includes a central portion 109 defined by a central frame member 111 of the frame assembly 105. However, the aspects of the present subject matter are not limited to the depicted layout of the vehicle 100.

Further, a handlebar assembly 110 is connected to a front wheel 115 through one or more front suspension(s) 120. A steering shaft (not shown) connects the handlebar assembly 110 to the front suspension(s) 120 and the steering shaft is rotatably journaled about the head tube 106. An engine assembly E is mounted to the frame assembly 105. The engine assembly E may also include a traction motor either hub mounted or mounted adjacent to the IC engine. In the depicted embodiment, the engine E is disposed below at least a portion of the one or more second frame members 108. However, in an alternative embodiment, the power unit may be fixedly disposed towards front and below the main tube 107. The engine assembly E is functionally connected to a rear wheel 130 through a transmission system (not shown). The vehicle may include one or more rear wheel(s). Also, the vehicle 100 includes an exhaust system that helps in dissipation of exhaust gasses from the engine assembly. The exhaust system 200 includes a muffler 135 mounted to the vehicle 100. In the depicted embodiment, the muffler 135 is disposed towards one lateral side of the vehicle 100.

Further, the rear wheel 130 is connected to the frame assembly 105 through one or more rear suspension(s) (not shown). In the depicted embodiment, the engine assembly E is swingably mounted to the frame assembly 105 through a toggle link 150 or the like. A seat assembly 140 is supported by the frame assembly 105 and is disposed rearward to the step-through portion 109.

Further, the vehicle 100 includes a front fender 155 covering at least a portion of the front wheel 115. In the present embodiment, a floorboard 145 is disposed at a step-through portion 109 and is supported by the first frame member 107 and a pair of floor frames (not shown). In an embodiment, a fuel tank (not shown) is disposed below the seat assembly 140 and behind the utility box. A rear fender 160 is covering at least a portion of the rear wheel 130. The vehicle 100 comprises of plurality of electrical/electronic components including a headlight 165, a tail light (not shown), a battery (not shown), a transistor-controlled ignition (TCI) unit (not shown), an alternator (not shown), a starter motor (not shown). Further, the vehicle 100 may include a synchronous braking system, an anti-lock braking system.

The vehicle 100 comprises plurality of panels that include a front panel 170 disposed in an anterior portion of the head tube 106, a leg-shield 171 disposed in a posterior portion of the head tube 106. A rear panel assembly 172 includes a right-side panel and a left side panel disposed below the seat assembly 140 and extending rearward from a rear portion of the floorboard 145 towards a rear portion of the vehicle 100. The rear panel assembly 172 encloses a utility box disposed below the seat assembly 140. Also, the rear panel assembly 172 partially encloses the engine assembly E. Also, the muffler 135 of the exhaust system is coupled to exhaust side of the IC engine and in an implementation the muffler 135 is disposed towards one lateral side of the vehicle 100.

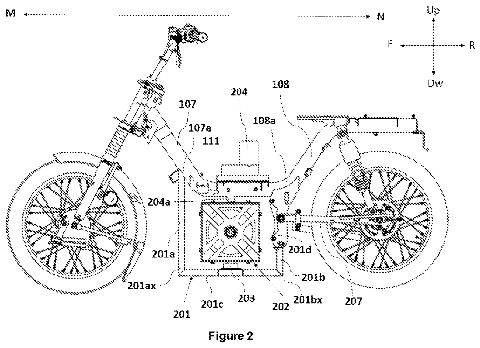

Figure 2 illustrates an exemplary vehicle employing a balancing system according to an aspect of the present invention. According to an embodiment of the present invention, the saddle-type vehicle 100 includes a frame-assembly 105. The frame assembly 105 includes a head tube 106, a front frame portion 107 extending obliquely rearwardly from the head tube 106 along a vehicle longitudinal axis MN.

The frame assembly 105 includes rear frame portion 108 extending rearwardly upwardly from the front frame portion 107 along the vehicle longitudinal axis MN. The frame assembly 105 includes a central frame portion 111 disposed in between the front frame portion 107 and the rear frame portion 108. The central frame portion 111 is lower to the front frame portion 107 and the rear frame portion 108. Further, the frame assembly 105 includes a support structure 201 extending downwardly from the central frame portion 111. The support structure 201 is configured to support one or more vehicular components 202, 207.

The one or more vehicular components include a balancing system 202 and a swing arm 207. The central frame portion 111 is disposed between a first junction 107a of the front frame portion 107 and a second junction 108a of the rear frame portion 108.

The support structure 201 includes a first arm 201a, a second arm 201b, and a joining arm 201c. The first arm 201a is extending substantially downwardly from the first junction 107a. The second arm 201b is extending substantially downwardly from the second junction 108a, and the joining arm 201c is configured to join a first arm-end portion 201ax and a second arm-end portion 201bx along said vehicle longitudinal axis MN.

The first arm 201a and the second arm 201b are substantially perpendicular to the vehicle longitudinal axis MN and the joining arm 201c is disposed below and substantially parallel to the central frame portion 111.

According to an embodiment of the present invention, the support structure 201 is configured to rotatably support a balancing system 202 of the one or more vehicular components 202, 207.

According to an embodiment of the present invention, the balancing system 202 is configured to rotate, the rotational movement is provided by a first driving member 204.

According to an embodiment of the present invention, the second arm 201b includes a bracket 201d. The bracket 201d is fixedly attached to the second junction 108a. The bracket 201d is configured to receive a portion of the swing arm 207.

According to an embodiment of the present invention, the first driving member 204 includes a coupler 204a. The coupler is configured to fixedly attach an output shaft (not shown) of the first driving member 204 to the balancing system 202.

According to an embodiment of the present invention, the balancing system 202 is disposed at a lower portion of the vehicle 100. The center of gravity is lower in the vehicle at this portion. Therefore, incorporating the balancing system 202 at the lower portion as disclosed in the present invention enables the balance of the vehicle. The balancing system 202 in the present embodiment is disposed closer to the center of gravity of the vehicle. Therefore, the balancing of the vehicle is comparatively easier.

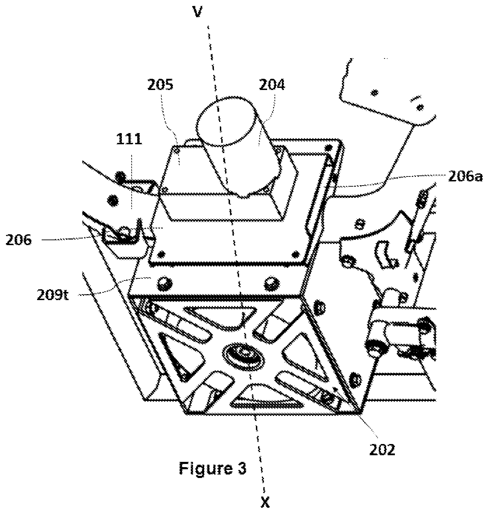

Figure 3 illustrates a portion of the balancing system attached to the frame assembly of the vehicle. According to an embodiment of the present invention, the first driving member 204 is attached to the central frame portion 111. In particular the first driving member 204 is attached to a mounting structure 206 is attached to the central frame portion 111. In an embodiment, the mounting structure 206 is supported by a flat member 206a. The flat member 206a is fixedly attached to the central frame portion 111. The flat member 206a is a flat structure that is configured to stably support the first driving member 204. The first driving member 204 is configured to provide required rotational movement to the balancing system 202. The stable mounting of the first driving member 204 on the central frame portion 111 enables stable operation of the first driving member 204. Thereby, the balancing system 202 is able to receive required rotational movement from the first driving member 204 without any delay from an output shaft (not shown) of the first driving member 204.

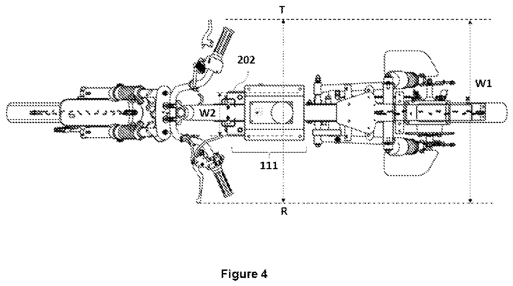

Figure 4 illustrates a top view of a saddled-vehicle according to an aspect of the present invention. The balancing system 202 is disposed substantially at a longitudinal center of the vehicle and center of the lateral axis (TR) along transverse direction of the vehicle 100. The lateral axis (TR) is present above and at the center of the center frame member 111. As per an aspect of the present subject matter, he balancing system 202 is configured with a second width of W2. The vehicle is configured with a first width W1. The first width W1 is configured to be greater than twice the width of the second width W2. The first width W1 < ½ W2. The balancing system 202 is thereby configured as a compact unit and easy to package in the saddle-type vehicle. The balancing system 202 as per the present subject-matter is capable of being accommodated in the available space in the layout of the vehicle and is easy to package in the vehicle in between other vehicular components.

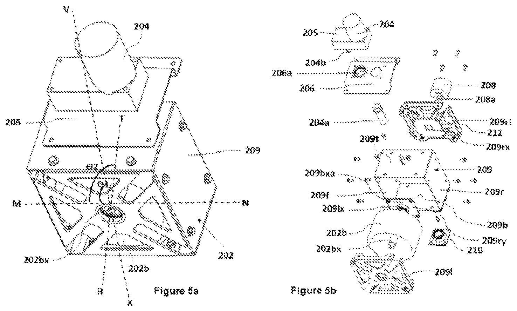

Figure 5a illustrates an assembly of a balancing system according to an aspect of the present subject-matter. The balancing system 202 includes a casing member 209. In an embodiment, the balancing system 202 is a partial cuboid. The balancing system includes a flywheel 202b. the flywheel 202b is accommodated and mounted inside the casing member 209. The flywheel 202b is rotatably supported inside the casing member 209. In an embodiment, the flywheel 202b is rotatable about a second axis (not shown). The second axis is parallel to the lateral axis TR along the vehicle transverse direction. The casing member 209 is rotatable about a third axis, for example, a vertical axis VX. A first driving member 204 is configured to provide rotational movement to the casing member 209. The first driving member 204 provides required rotational movement to the casing member 209 whenever required, in particular whenever a roll angle of the vehicle is detected. The rotational movement of the fly wheel 202b along the vehicle lateral axis TR at a pre-determined rotational speed (rpm) along with the rotational movement of the casing member 209 enables the balancing system to produce required reaction torque about a third axis, for example, about a vehicle longitudinal axis MN of the vehicle. The reaction torque produced is configured to balance the vehicle and bring back the vehicle to a stabled state. The compact balancing system 202 along with stable mounting of the first driving member 204 are configured to provide required reaction torque to the vehicle 100 even at the slightest of roll of the vehicle along the roll direction. The principle of gyroscope is hereby implemented to achieve the desired balancing counter torque to counter the roll of the vehicle.

Figure 5b illustrates an exploded view of a balancing system according to an aspect of the present invention. The flywheel 202b is configured to accommodate a portion of the second driving member 208. The flywheel 202b and the portion of the second driving member 208 accommodated inside the flywheel 202b are supported by and disposed inside the casing member 209.

In another embodiment, the casing member 209 is a cuboid comprising a first lateral face 2091, a second lateral face 209rt, a front face 209f, a rear face 209r, a top face 209t, and a bottom face 209b.

In an embodiment the first lateral face 2091 is located on a right side of the casing member 209. The first lateral face 2091 includes a first rotation enabling- member 202lx. The first rotation enabling member 202lx is configured to support a portion of a flywheel shaft 202bx of the flywheel 202b. The first rotation enabling member 202lx is configured to provide rotational movement to the flywheel 202b about the lateral axis TR of the vehicle 100. The second lateral face 209rt is located on a left side of the casing member 209, the second lateral face 209rt is configured to support the second driving member 208, and the top face 209t is configured to receive a portion of the first driving member 204.

In another embodiment the first driving member 204 is coupled to a gear box 205. The gear box 205 is configured to function as a torque amplifier. In yet another embodiment, the gear box 205 is configured to change direction of output through the output shaft of the first driving member 204 to the coupler 204a.

In an embodiment of the present subject-matter, the casing member 209 includes one or more faces 2091, 209r, 209f, 209r, 209t, and 209b that are configured to include multiple louvers 212.

According to an embodiment of the present invention, the second lateral face 209rt includes a flywheel receiving portion 209rx. The flywheel receiving portion 209rx is configured to detachably receive the flywheel 202b. In another embodiment, the flywheel includes a flywheel shaft 202bx. An end of the flywheel shaft 202bx is received by a shaft receiving member 209bxa. The shaft receiving member 209bxas is detachably attached to the flywheel receiving portion 209rx.

According to an embodiment of the present invention, the output shaft 204b of the first driving member 204 is rotatably attached to one end of a coupler 204a. Another end of the coupler 204a is rigidly attached to the top face 209t of the casing member 202.

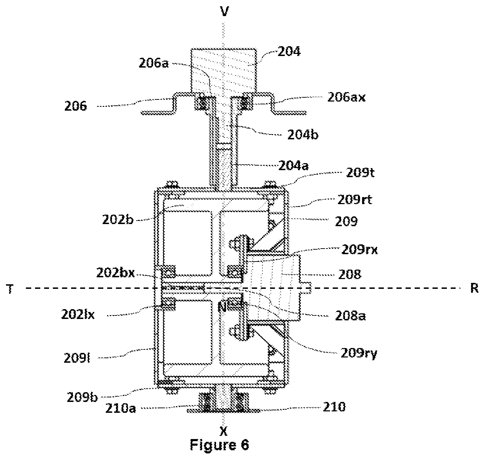

Figure 6 illustrates a sectional view of the balancing system taken along vertical axis VX as shown in the Figure 3. The first driving member 204 is configured to enable rotational movement to the casing member 209. The first driving member includes the output shaft 204b that is coupled to the casing member 209 through the coupler 204a. The coupler at one end includes a second rotation enabling member 206ax. The second rotation enabling member 206ax enables rotation of the coupler 204b. Another end of the coupler 204a is rigidly attached to the top face 209t of the casing member 209. The rotational movement is generated and transferred through the coupler 204a to the casing member 209.

In an embodiment of the present subject matter, the second driving member 208 is accommodated inside the flywheel 202b. The flywheel 202b along with the second driving member 208 is rotatably attached to the casing member 209. In particular the flywheel receiving portion 209rx is configured to fixedly receive the second driving member 208. The second driving member includes a second output shaft 208a coupled to a flywheel shaft 202bx. The flywheel shaft 202bx is provided with rotational movement by a third rotation enabling member 209ry. One end of the flywheel shaft 202bx is rotatably attached to the first lateral face 2091 of the casing member 209. Another end of the flywheel shaft 202b is coupled to the second shaft member 208a. This way, the rotational movement output from the second driving member 208 is transmitted to the flywheel 202b through the flywheel shaft 202bx.

According to an embodiment of the present invention, the one or more faces 2091, 209rt, 209t, 209b, 209f, 209r are detachably attached to each other to form a cuboid structure. The bottom face 209b is configured to be attached to a bottom mounting structure 210. The bottom mounting structure 210 includes a bottom rotation enabling member 210a. The bottom rotation enabling member 210a is configured to enable rotational movement to the casing member 209. In an embodiment, the bottom mounting structure 210 is supported by the joining arm (201c as shown in Figure 2) of the support structure 201 (as shown in Figure 2).

The second driving member 208 is configured to provide a pre-determined rotational speed (rpm) to the flywheel 202b. The flywheel 202b is rotatable about the lateral axis TR. The casing member 209 is enabled to rotate by the first driving member 204. The rotation of the casing member 209 is enabled whenever the controller (not shown) detects any roll angle deviation of the vehicle with respect to the vehicle longitudinal axis. The rotation of the flywheel 202b and the casing member 209 produces a reaction torque in the direction perpendicular to both the rotational axes of the flywheel 202b and the casing member 209 respectively as per principles of gyroscopic effect. However, in the present subject matter and Figure 6, the axis along which the reaction torque is produced, is, along the vehicle longitudinal axis and can only be depicted as a point at the center of the balancing system 202.

According to an aspect of the present invention, the second driving member 208 is inserted inside the flywheel 202b. The second driving member 208 is inserted such that it occupies most of the hollow space available in one half of the flywheel 202b. As a result of the above said configuration, the balancing system 202 obtained is compact, lightweight, and the width of the balancing system 201 is considerably reduced as compared to the conventional balancing systems and the balancing systems as mentioned in the known art. The compact and light weight balancing system can be easily adapted to a saddle-type vehicle without much modification in the existing layout of the vehicle.

In addition to being compact, the flywheel 202b is capable of being mounted at the center of the vehicle and at a substantially lower portion of the vehicle. The center of gravity is considerably low according to the present configuration. The roll or capsize balancing of the vehicle, particularly at low speeds is improved as compared to the conventional vehicle.

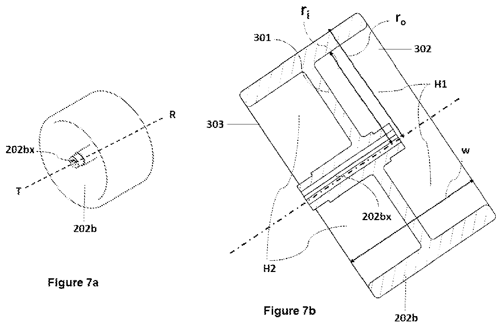

According to an aspect of the present invention, the flywheel 202b is configured to receive a substantial portion of the second driving member 208. The flywheel 202b includes one or more hollow portions H1 and H2 (shown in Figure 7). The one or more hollow portions H1 and H2 are capable of receiving 3/4th of the total length of the second driving member 208 along the lateral axis TR of the vehicle 100.

In an embodiment, preferably a high-density material is chosen for configuring the flywheel 202b as explained above. The ratio of balancing moment (mass moment of inertial) to mass of the flywheel 202b as per the present subject matter is enhanced as compared to the conventional balancing system including a solid cylinder as a flywheel. This aspect of the present invention is further explained with reference to the mathematical representations in the following paragraphs. The ratio of balancing moment to mass of the conventional solid cylinder functioning as a fly wheel is:

$$(MOI)_{solid\ cylinder} = \frac{1}{2} \times \rho \times \pi \times h \times r^4$$

$$(Mass)_{solid\ cylinder} = \rho \times \pi \times h \times r^2$$

$$\frac{(MOI)_{solid\ cylinder}}{(Mass)_{solid\ cylinder}} = \frac{1}{2} \times r^2$$

Where,

ρ- Density of material of the cylinder,
r-Radius of the cylinder, and
h - Height of the cylinder.

Whereas, the ration of balancing moment to mass of the flywheel 202b is,

$$(MOI)_{hollow\ cylinder} = \frac{1}{2} \times \rho \times \pi \times h \times (r_o^4 - r_i^4)$$

$$(Mass)_{hollow\ cylinder} = \rho \times \pi \times h \times (r_o^2 - r_i^2)$$

$$\frac{(MOI)_{hollow\ cylinder}}{(Mass)_{hollow\ cylinder}} = \frac{1}{2} \times (r_o^2 + r_i^2)$$

$$r_o > r_i$$

Where,

ρ - Density of material of the cylinder
ro - outer radius of the cylinder,
ri - Inner radius of the cylinder, and
h - Height of the cylinder

Now if the outer radii of the hollow and that of the flywheel as per the present aspect are the same, (i.e.) ro = r,

$$\frac{(MOI)_{hollow\ cylinder}}{(Mass)_{hollow\ cylinder}} > \frac{(MOI)_{solid\ cylinder}}{(Mass)_{solid\ cylinder}}$$

Hence, flywheel including one or more hollow portions H1 and H2, configured with high-density material is desirable since it has high ratio of balancing moment to mass. Hence, a hollow flywheel of high-density material is chosen since it has high ratio of balancing moment to mass.

According to an embodiment of the present subject matter, the ratio of outer radius ro and a width w of the flywheel 202b varies in the range of 0.1-1.5.

According to an embodiment of the present invention, the ratio of the packaging volume of the flywheel 202b and the rotational speed of the second driving member 208 is in the range of 4-7. The ratio as said above is configured to according to the present subject matter to generate the required reaction torque to stabilize the vehicle.

Figure 7a illustrates a perspective view of a flywheel of the balancing system according to an aspect of the present invention. The flywheel 202b as depicted in the figure is a bowl-shaped structure with two opposite side open ends. The flywheel 202b includes the flywheel shaft 202bx extending along the axis of the flywheel 202b. The flywheel shaft 202bx enables mounting of the flywheel 202b to the second driving member (not shown) and the first rotation enabling member (not shown), wherein as per an embodiment, the rotation enabling members are bearings.

Figure 7b illustrates a sectional view of the flywheel of the balancing system as taken along axial direction as shown in Figure 7a. According to an embodiment of the present invention, the flywheel 202b includes a center portion 301 that is solid, and includes open ended sides 302, 303 disposed opposite to either sides of the center portion 301.

According to an embodiment of the present invention, the flywheel 202b is configured such that the center portion 301 and each of the open-ended sides 302, 303 include one or more hollow portions H1, H2 therebetween.

The one or more hollow portions H1, H2 enable receiving a portion of the second driving member (not shown) and enable light weight flywheel 202b. The compact flywheel 202b so obtained as per the present invention is suitable to be adapted in the saddle-type vehicle.

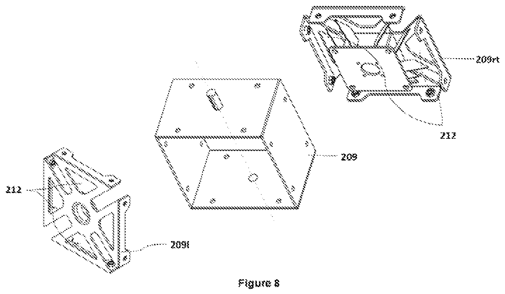

Figure 8 illustrates an exploded view of the casing member of the balancing system according to an aspect of the present invention. The casing member 209 includes one or more faces. In an embodiment, the first lateral face 2091 and the second lateral face 209rt each include multiple louvers 212. In another aspect of the present invention, the multiple louvers 212 are openings. The multiple louvers 212 are configured to receive atmospheric air. The atmospheric air entering the multiple louvers 212 during vehicle running condition tends to cool the second driving member (not shown) that is accommodated and mounted inside the casing member 209. As a result, the durability and reliability of the balancing system 202 is increased.

**Reference Numerals:**

100 saddle-type vehicle
105 frame assembly
106 head tube
107 front frame portion

107a first junction
108 second frame portion
108a second junction
109 central portion
110 handlebar assembly
111 step-through frame
115 front wheel
120 one or more front suspension(s)
130 rear wheel
135 muffler
140 seat assembly
145 floorboard
150 toggle link
155 front fender
160 rear fender
165 headlight
170 front panel
171 leg-shield
172 rear panel assembly
200 exhaust system
201 support structure
201a first arm
201b second arm
201c joining arm
201d bracket
202, 207 one or more vehicular components
201ax first arm-end portion
201bx second arm-end portion
202 balancing system
202b flywheel
202bx flywheel shaft
202lx first rotation enabling-member
204 first driving member
204a coupler
204b output shaft
206 mounting structure
206a flat member
206ax third rotation enabling member
207 swing arm
208 second driving member
209 casing member
209l first lateral face
209rt second lateral face
209f front face
209r rear face
209rx flywheel receiving portion
209t top face
209b bottom face
209ry third rotation enabling member
212 multiple louvers
E engine assembly
MN vehicle longitudinal axis
TR lateral axis
W1 first width
W2 second width
VX vertical axis
H1, H2 one or more hollow portions

**Claims**

1. A saddle type vehicle (100) including a balancing system (202), said balancing system (202) comprising:

   a casing member (209) rotatable about a first axis (VX);
   a flywheel (202b) rotatable about a lateral axis (TR), said flywheel (202b) accommodated inside said casing member (209);
   a first driving member (204) configured to enable rotational movement to said casing member (209);
   a second driving member (208) configured to enable rotational movement to said flywheel (202b),
   wherein said flywheel (202b) includes one or more hollow portions (H1 and H2); and
   wherein the balancing system (202) is rotatably supported by a support structure (201) of said saddle type vehicle (100),
   wherein said casing member (209) includes one or more faces (2091, 209r, 209f, 209r, 209t, 209b) being configured to include multiple louvers (212), wherein said casing member (209) is a cuboid comprising a first lateral face (2091), a second lateral face (209rt), a front face (209f), a rear face (209r), a top face (209t), and a bottom face (209b),
   wherein said first lateral face (2091) is located on one of a right side or left side of said casing member (209) when seen from a top direction of said vehicle, and said first lateral face (2091) includes a first rotation enabling member (202lx),
   said first rotation enabling member (202lx) being configured to support a portion of a flywheel shaft (202bx) of said flywheel (202b), and to provide rotational movement to said flywheel (202b) about said lateral axis (TR) of said vehicle (100),

   wherein said second lateral face (209rt) is located on a left side of said casing member (209), said second lateral face (209rt) being configured to support said second driving member (208), and
   wherein said top face (209t) is configured to receive a portion of said first driving member (204).

2. The saddle-type vehicle (100) as claimed in claim 1, wherein said one or more hollow portions (H1 and H2) are capable of receiving a substantial portion of said second driving member (208).

3. The saddle-type vehicle (100) as claimed in claim 1, wherein said first driving member (204) is coupled to a gear box (205).

4. The saddle-type vehicle (100) as claimed in claim 1, wherein said one or more hollow portions (H1 and H2) are capable of receiving 3/4 of the total length of said second driving member (208) along said lateral axis TR of said vehicle (100).

5. The saddle-type vehicle (100) as claimed in claim 1, wherein said flywheel (202b) is configured with an outer radius ($r_o$) and a width (w), a ratio of said outer radius ($r_o$) and said width (w) varies in a range of 0.1 to 1.5,

wherein said flywheel (202b) is configured with a packaging volume (V) and said second driving member (208) is configured with a rotational speed (w), a second ratio of said packaging volume (V) and said rotational speed (w) being in a range of 4 to 7, and wherein said flywheel (202b) includes a center portion (301) that is solid, and includes open ended sides (302, 303) disposed opposite to either sides of said center portion (301).

6. The saddle-type vehicle (100) as claimed in claim 5, wherein said center portion (301) and each of said open-ended sides (302, 303) include said one or more hollow portions (H1 and H2) therebetween.

7. The saddle-type vehicle (100) as claimed in claim 1, wherein said fly wheel (202b) is rotatably supported by said casing member (209).

8. The saddle-type vehicle (100) as claimed in claim 1, wherein said casing member (209) includes said one or more faces (2091, 209r, 209f, 209r, 209t, and 209b), said one or more faces (2091, 209r, 209f, 209r, 209t, and 209b) including said top face (209t) and said bottom face (209b), said top face (209t) being configured to rotatably support an output shaft (202bx) of said first driving member (204), and said bottom face (209b) being rotatably attached to a joining arm (201c).

9. The saddle-type vehicle (100) as claimed in claim 1, wherein said first driving member (204) is mounted on a mounting structure (206), said mounting structure (206) is supported by said central frame portion (111) of said vehicle (100), wherein said first driving member (204) and said second driving member (208) are fixedly attached to said casing member (209).

10. The saddle-type vehicle (100) including a balancing system (202) as claimed in any one of the preceding claims, said saddle type vehicle (100) comprising:

a head tube (106);
a front frame portion (107) extending obliquely rearwardly from said head tube (106) along a vehicle longitudinal axis (MN);
a rear frame portion (108) extending rearwardly upwardly from said front frame portion (107) along said vehicle longitudinal axis (MN); wherein
said central frame portion (111) is disposed in between said front frame portion (107) and said rear frame portion (108), and is disposed lower to said front frame portion (107) and said rear frame portion (108);
said support structure (201) extends downwardly from said central frame portion (111); and
said balancing system (202) is configured to enable stabilization of said vehicle (100).

11. The saddle-type vehicle (100) as claimed in claim 10, wherein said support structure (201) is configured to support a swing arm (207), or wherein said support structure (201) includes a first arm (201a), a second arm (201b), and a joining arm (201c), said first arm (201a) extending downwardly from a first junction (107a), said second arm (201b) extending downwardly from a second junction (108a), and said joining arm (201c) being configured to join a first arm-end portion (201ax) and a second arm-end portion (201bx) and being substantially parallel along said vehicle longitudinal axis (MN).

12. The saddle-type vehicle (100) as claimed in claim 10, wherein said central frame portion (111) is disposed between said first junction (107a) joining said front frame portion (107) and said central frame portion (111) and said second junction (108a) joining said central frame portion (111) and said rear frame portion (108).

13. The saddle-type vehicle (100) as claimed in claim 11, wherein said first arm (201a) and said second arm (201b) are substantially perpendicular to said vehicle longitudinal axis (MN) and said joining arm (201c) is disposed below and substantially parallel to said central frame portion (111).

14. The saddle-type vehicle (100) as claimed in claim 10, wherein said support structure (201) is configured to rotatably support said balancing system (202), wherein said balancing system (202) is disposed substantially at longitudinal center of said vehicle (100) and center of the lateral axis (TR) along transverse direction of the vehicle (100), , and wherein said vehicle (100) comprises a first width W1 and said balancing system (202) comprises a second width W2, wherein said first width W1 is greater than twice said second width W2.

## Patentansprüche

1. Sattelfahrzeug (100) mit einem Balanciersystem (202), wobei das Balanciersystem (202) aufweist:

   ein Gehäuseelement (209), das um eine erste Achse (VX) drehbar ist;
   ein Schwungrad (202b), das um eine seitliche Achse (TR) drehbar ist, wobei das Schwungrad (202b) in dem Gehäuseelement (209) untergebracht ist;
   ein erstes Antriebselement (204), dazu eingerichtet, eine Drehbewegung des Gehäuseelements (209) zu gestatten;
   ein zweites Antriebselement (208), dazu eingerichtet, eine Drehbewegung des Schwungrads (202b) zu gestatten,
   wobei das Schwungrad (202b) einen oder mehrere hohle Teilbereiche (H1 und H2) aufweist; und
   wobei das Balanciersystem (202) mit eine Trägerstruktur (201) des Sattelfahrzeugs (100) drehbar gelagert gehalten ist,
   wobei das Gehäuseelement (209) eine oder mehrere Flächen (2091, 209r, 209f, 209r, 209t, 209r, 209f, 209r, 209t, 209b) beinhaltet, die mehrere Lamellen (212) enthaltend konfiguriert sind, wobei das Gehäuseelement (209) eine Quaderstruktur mit einer ersten Seitenfläche (2091), einer zweiten Seitenfläche (209rt), einer Vorderfläche (209f), einer Rückfläche (209r), einer oberen Fläche (209t) und einer unteren Fläche (209b) ist,
   wobei die erste Seitenfläche (2091) sich entweder auf der rechten oder auf der linken Seite des Gehäuseteils (209) von der Oberseite des Fahrzeugs aus gesehen befindet und die erste Seitenfläche (2091) ein erstes drehungsermöglichendes Element (202lx) enthält,
   wobei das erste drehungsermöglichende Element (202lx) dazu eingerichtet ist, einen Teil einer Schwungradwelle (202bx) des Schwungrads (202b) zu halten und dem Schwungrad (202b) eine Drehbewegung um die Querachse (TR) des Fahrzeugs (100) zu bieten,

   wobei die zweite Seitenfläche (209rt) sich auf einer linken Seite des Gehäuseelements (209) befindet, wobei die zweite Seitenfläche (209rt) dazu eingerichtet ist, das zweite Antriebselement (208) zu tragen, und
   wobei die obere Fläche (209t) dazu eingerichtet ist, einen Teil des ersten Antriebselements (204) aufzunehmen.

2. Sattelfahrzeug (100) nach Anspruch 1, wobei der eine bzw. die mehreren hohlen Teilbereiche (H1 und H2) zum Aufnehmen eines wesentlichen Teil des zweiten Antriebselements (208) fähig sind.

3. Sattelfahrzeug (100) nach Anspruch 1, wobei das erste Antriebselement (204) mit einem Getriebe (205) gekoppelt ist.

4. Sattelfahrzeug (100) nach Anspruch 1, wobei der eine bzw. die mehreren hohlen Teilbereiche (H1 und H2) zum Aufnehmen von 3/4 der Gesamtlänge des zweiten Antriebselements (208) entlang der Querachse TR des Fahrzeugs (100) fähig sind.

5. Sattelfahrzeug (100) nach Anspruch 1, wobei das Schwungrad (202b) mit einem Außenradius ($r_o$) und einer Breite (w) ausgebildet ist, ein Verhältnis des Außenradius ($r_o$) zu der Breite (w) variiert in einem Bereich von 0,1 bis 1,5,

   wobei das Schwungrad (202b) mit einem Packungsvolumen (V) ausgebildet ist und das zweite Antriebselement (208) mit einer Drehgeschwindigkeit (w) ausgebildet ist, wobei ein zweites Verhältnis des Packungsvolumens (V) zu der Drehgeschwindigkeit (w) in einem Bereich von 4 bis 7 liegt, und
   wobei das Schwungrad (202b) einen Mittelbereich (301) aufweist, der fest ist, sowie Seiten (302, 303) mit offenen Enden aufweist, die den beiden Seiten des Mittelbereichs (301) gegenüber angeordnet sind.

6. Sattelfahrzeug (100) nach Anspruch 5, wobei der Mittelbereich (301) und jede der Seiten (302, 303) mit offenen Enden zwischen sich den einen bzw. die mehreren hohlen Teile (H1 und H2) beinhalten.

7. Sattelfahrzeug (100) nach Anspruch 1, wobei das Schwungrad (202b) von dem Gehäuseelement (209) drehbar gelagert gehalten ist.

8. Sattelfahrzeug (100) nach Anspruch 1, wobei das Gehäuseelement (209) die eine bzw. mehreren Flächen (2091, 209r, 209f, 209r, 209t und 209b) beinhaltet, wobei die eine bzw. mehreren Flächen (2091, 209r, 209f, 209r, 209t, und 209b) die obere Fläche (209t) und die untere Fläche (209b) beinhalten, wobei die obere Fläche (209t) dazu eingerichtet ist, die eine Ausgangswelle (202bx) des ersten Antriebselements (204) drehbar gelagert zu halten, und wobei die untere Fläche (209b) drehbar an einem Verbindungsarm (201c) angebracht ist.

9. Sattelfahrzeug (100) nach Anspruch 1, wobei das erste Antriebselement (204) an einer Montagestruktur (206) angebracht ist, wobei die Montagestruktur (206) von dem mittleren Rahmenbereich (111) des Fahrzeugs (100) getragen wird, wobei das erste Antriebselement (204) und das zweite Antriebselement (208) fest an dem Gehäuseelement (209) angebracht sind.

10. Sattelfahrzeug (100) mit einem Balanciersystem (202) nach einem der vorhergehenden Ansprüche, wobei das Sattelfahrzeug (100) aufweist:

einen Lenkkopf (106);
einen vorderen Rahmenbereich (107), der sich von dem Lenkkopf (106) entlang einer Fahrzeuglängsachse (MN) schräg nach hinten erstreckt;
einen hinteren Rahmenbereich (108), der sich von dem vorderen Rahmenbereich (107) entlang der Fahrzeuglängsachse (MN) nach hinten oben erstreckt;
wobei
der mittlere Rahmenbereich (111) zwischen dem vorderen Rahmenbereich (107) und dem hinteren Rahmenbereich (108) positioniert ist und niedriger als der vordere Rahmenbereich (107) und der hintere Rahmenbereich (108) positioniert ist;
die Stützstruktur (201) sich von dem mittleren Rahmenbereich (111) nach unten erstreckt; und
das Balanciersystem (202) dazu eingerichtet ist, eine Stabilisierung des Fahrzeugs (100) zu gestatten.

11. Sattelfahrzeug (100) nach Anspruch 10, wobei die Trägerstruktur (201) dazu eingerichtet ist, einen Schwenkarm (207) zu tragen, oder wobei die Trägerstruktur (201) einen ersten Arm (201a), einen zweiten Arm (201b) und einen Verbindungsarm (201c) beinhaltet, wobei sich der erste Arm (201a) von einer ersten Verbindungsstelle (107a) nach unten erstreckt, der zweite Arm (201b) sich von einer zweiten Verbindungsstelle (108a) nach unten erstreckt, und der Verbindungsarm (201c) zur Verbindung eines ersten Arm-Endabschnitts (201ax) und eines zweiten Arm-Endabschnitts (201bx) eingerichtet ist und im Wesentlichen parallel zur Fahrzeuglängsachse (MN) ist.

12. Sattelfahrzeug (100) nach Anspruch 10, wobei der mittlere Rahmenbereich (111) zwischen der ersten Verbindungsstelle (107a), die den vorderen Rahmenbereich (107) und den mittleren Rahmenbereich (111) verbindet, und der zweiten Verbindungsstelle (108a), die den mittleren Rahmenbereich (111) und den hinteren Rahmenbereich (108) verbindet, positioniert ist.

13. Sattelfahrzeug (100) nach Anspruch 11, wobei der erste Arm (201a) und der zweite Arm (201b) im Wesentlichen senkrecht zur Fahrzeuglängsachse (MN) verlaufen und der Verbindungsarm (201c) sich unterhalb und im Wesentlichen parallel zum mittleren Rahmenbereich (111) befindet.

14. Sattelfahrzeug (100) nach Anspruch 10, wobei die Trägerstruktur (201) dazu eingerichtet ist, das Balanciersystem (202) drehbar gelagert zu tragen, wobei das Balanciersystem (202) im Wesentlichen in der Längsmitte des Fahrzeugs (100) und der Mitte der Querachse (TR) entlang der Querrichtung des Fahrzeugs (100) positioniert ist, und wobei das Fahrzeug (100) eine erste Breite W1 und das Balanciersystem (202) eine zweite Breite W2 aufweist, wobei die erste Breite W1 größer als das Doppelte der zweiten Breite W2 ist.

## Revendications

1. Véhicule de type selle (100) comprenant un système d'équilibrage (202), ledit système d'équilibrage (202) comprenant :

un élément de boîtier (209) rotatif autour d'un premier axe (VX) ;
un volant d'inertie (202b) rotatif autour d'un axe latéral (TR), ledit volant d'inertie (202b) étant logé à l'intérieur dudit élément de boîtier (209) ;
un premier élément d'entraînement (204) configuré pour permettre un mouvement de rotation dudit élément de boîtier (209) ;
un deuxième élément d'entraînement (208) configuré pour permettre un mouvement de rotation dudit volant d'inertie (202b),
ledit volant d'inertie (202b) comportant une ou plusieurs parties creuses (H1 et H2) ; et
le système d'équilibrage (202) étant supporté de manière rotative par une structure de support (201) dudit véhicule de type selle (100),
dans lequel ledit élément de boîtier (209) inclut une ou plusieurs faces (2091, 209r, 209f, 209r, 209t, 209b) configurées pour inclure plusieurs persiennes (212), ledit élément de boîtier (209) étant un cuboïde comprenant une première face latérale (2091), une deuxième face latérale (209rt), une face avant (209f), une face arrière (209r), une face supérieure (209t) et une face inférieure (209b),
ladite première face latérale (2091) étant située sur l'un des côtés droit ou gauche de l'élément de boîtier (209) vu depuis la direction supérieure du véhicule, et ladite première face latérale (2091) incluant un premier élément permettant la rotation (202lx),
ledit premier élément permettant la rotation (202lx) étant configuré pour supporter une partie d'un arbre de volant (202bx) dudit volant d'inertie (202b), et pour fournir un mouvement de rotation audit volant d'inertie (202b) autour dudit axe latéral (TR) dudit véhicule (100),

ladite deuxième face latérale (209rt) étant située sur un côté gauche dudit élément de boîtier (209), ladite deuxième face latérale (209rt) étant configurée pour supporter ledit deuxième élément d'entraînement (208), et ladite face supérieure (209t) étant configurée pour recevoir une partie dudit premier élément d'entraînement (204).

2. Véhicule de type selle (100) selon la revendication 1, dans lequel ladite ou lesdites parties creuses (H1 et H2) sont capables de recevoir une partie substantielle dudit deuxième élément moteur (208).

3. Véhicule de type selle (100) selon la revendication 1, dans lequel le premier élément d'entraînement (204) est couplé à une boîte de vitesses (205).

4. Véhicule de type selle (100) selon la revendication 1, dans lequel ladite ou lesdites parties creuses (H1 et H2) sont capables de recevoir les 3/4 de la longueur totale dudit deuxième élément moteur (208) le long dudit axe latéral TR dudit véhicule (100).

5. Véhicule de type selle (100) selon la revendication 1, dans lequel ledit volant d'inertie (202b) est configuré avec un rayon extérieur ($r_o$) et une largeur (w), un rapport dudit rayon extérieur ($r_o$) et de ladite largeur (w) varie dans une plage de 0,1 à 1,5,

ledit volant d'inertie (202b) étant configuré avec un volume d'emballage (V) et ledit deuxième élément d'entraînement (208) étant configuré avec une vitesse de rotation (w), un second rapport dudit volume d'emballage (V) et ladite vitesse de rotation (w) étant compris entre 4 et 7, et

ledit volant d'inertie (202b) incluant une partie centrale (301) qui est solide, et incluant des côtés ouverts (302, 303) disposés à l'opposé de chaque côté de ladite partie centrale (301).

6. Véhicule de type selle (100) selon la revendication 5, dans lequel ladite partie centrale (301) et chacun desdits côtés ouverts (302, 303) incluent une ou plusieurs parties creuses (H1 et H2) entre elles.

7. Véhicule de type selle (100) selon la revendication 1, dans lequel ledit volant d'inertie (202b) est supporté de manière rotative par ledit élément de boîtier (209).

8. Véhicule de type selle (100) selon la revendication 1, dans lequel ledit élément de boîtier (209) comprend ladite ou lesdites faces (2091, 209r, 209f, 209r, 209t, et 209b), ladite ou lesdites faces (2091, 209r, 209f, 209r, 209t, et 209b) incluant ladite face supérieure (209t) et ladite face inférieure (209b), ladite face supérieure (209t) étant configurée pour supporter de manière rotative un arbre de sortie (202bx) dudit premier élément d'entraînement (204), et ladite face inférieure (209b) étant attachée de manière rotative à un bras de jonction (201c).

9. Véhicule de type selle (100) selon la revendication 1, dans lequel ledit premier élément d'entraînement (204) est monté sur une structure de montage (206), ladite structure de montage (206) étant supportée par ladite partie centrale du cadre (111) dudit véhicule (100), ledit premier élément d'entraînement (204) et ledit deuxième élément moteur (208) étant fixés audit élément de boîtier (209).

10. Véhicule de type selle (100) comprenant un système d'équilibrage (202) selon l'une quelconque des revendications précédentes, ledit véhicule de type selle (100) comprenant :

un tube de direction (106) ; une partie de cadre avant (107) s'étendant obliquement vers l'arrière à partir dudit tube de direction (106) le long d'un axe longitudinal du véhicule (MN) ; une partie de cadre arrière (108) s'étendant vers l'arrière vers le haut à partir de ladite partie de cadre avant (107) le long dudit axe longitudinal du véhicule (MN) ; dans lequel ladite partie centrale du cadre (111) est disposée entre ladite partie avant du cadre (107) et ladite partie arrière du cadre (108), et est disposée plus bas que ladite partie avant du cadre (107) et ladite partie arrière du cadre (108) ; ladite structure de support (201) s'étend vers le bas à partir de ladite partie centrale du cadre (111) ; et ledit système d'équilibrage (202) est configuré pour permettre la stabilisation dudit véhicule (100).

11. Véhicule de type selle (100) selon la revendication 10, dans lequel ladite structure de support (201) est configurée pour supporter un bras oscillant (207), ou dans lequel ladite structure de support (201) comprend un premier bras (201a), un second bras (201b), et un bras de jonction (201c), ledit premier bras (201a) s'étendant vers le bas à partir d'une première jonction (107a), ledit second bras (201b) s'étendant vers le bas à partir d'une seconde jonction (108a), et ledit bras de jonction (201c) étant configuré pour joindre une première partie d'extrémité de bras (201ax) et une seconde partie d'extrémité de bras (201bx) et étant sensiblement parallèle le long dudit axe longitudinal du véhicule (MN).

**12.** Véhicule de type selle (100) selon la revendication 10, dans lequel ladite partie centrale du cadre (111) est disposée entre ladite première jonction (107a) reliant ladite partie avant du cadre (107) et ladite partie centrale du cadre (111) et ladite deuxième jonction (108a) reliant ladite partie centrale du cadre (111) et ladite partie arrière du cadre (108).

**13.** Véhicule de type selle (100) selon la revendication 11, dans lequel ledit premier bras (201a) et ledit second bras (201b) sont sensiblement perpendiculaires audit axe longitudinal (MN) du véhicule et ledit bras de jonction (201c) est disposé en dessous et sensiblement parallèle à ladite partie centrale du cadre (111).

**14.** Véhicule de type selle (100) selon la revendication 10, dans lequel ladite structure de support (201) est configurée pour supporter de manière rotative ledit système d'équilibrage (202), ledit système d'équilibrage (202) étant disposé sensiblement au centre longitudinal dudit véhicule (100) et au centre de l'axe latéral (TR) le long de la direction transversale du véhicule (100), et ledit véhicule (100) comportant une première largeur W1 et ledit système d'équilibrage (202) comportant une seconde largeur W2, ladite première largeur W1 étant supérieure au double de ladite seconde largeur W2.

Figure 1

Figure 2

Figure 3

Figure 4

Figure 5a

Figure 5b

Figure 6

Figure 7a

Figure 7b

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 209852452 U